Europäisches Patentamt

(19) European Patent Office

Office européen des brevets

(11) Publication number: **0 295 226 B1**

(12) **EUROPEAN PATENT SPECIFICATION**

(45) Date of publication of patent specification:
09.10.91 Bulletin 91/41

(51) Int. Cl.$^5$: **H04B 7/26, H04L 1/00**

(21) Application number: **88850085.7**

(22) Date of filing: **09.03.88**

(54) **Apparatus in a mobile telephone receiver for reducing bit error.**

(30) Priority: **23.04.87 SE 8701679**

(43) Date of publication of application:
**14.12.88 Bulletin 88/50**

(45) Publication of the grant of the patent:
**09.10.91 Bulletin 91/41**

(84) Designated Contracting States:
**DE FR GB IT NL**

(56) References cited:
**US-A- 4 309 770**
**US-A- 4 457 007**
**US-A- 4 656 644**

(73) Proprietor: **TELEFONAKTIEBOLAGET L M ERICSSON**
**S-126 25 Stockholm (SE)**

(72) Inventor: **Raith, Alex Krister**
**Vejlegatan 9**
**S-163 42 Spanga (SE)**

## Description

## TECHNICAL FIELD

The present invention generally relates to reception in a mobile telephone installation operating in time division multiple access (TDMA). More specifically, there is intended an apparatus included in the mobile telephone receiver for reducing the bit error which can occur in transmission between a transmitting base station (base) and a receiving mobile station (mobile) due to multipath propagation and fading.

## BACKGROUND ART

## General on TDMA

In more recent times a new transmission principle has been introduced for transmittig between mobiles in a mobile telephone system, this being TDMA. This principle signifies that information in a call which is to be transmitted takes place in digital form, i.e. in the form of bits (digital 1's and digital 0's), and that several calls are transmitted over a channel by the bit patterns of the different calls being interleaved in time. A bit pattern within a time slot (slot) comprises here of a given number of digital 1's and 0's, all pertaining to a certain call. The principle is the same as with PCM time multiplexing in a telephone system using wire transmission, but one difference is that with TDMA more bits in the pattern are transmitted within a time slot than in wire telephone, where only one sample (usually 8 bits) is transmitted in each slot.

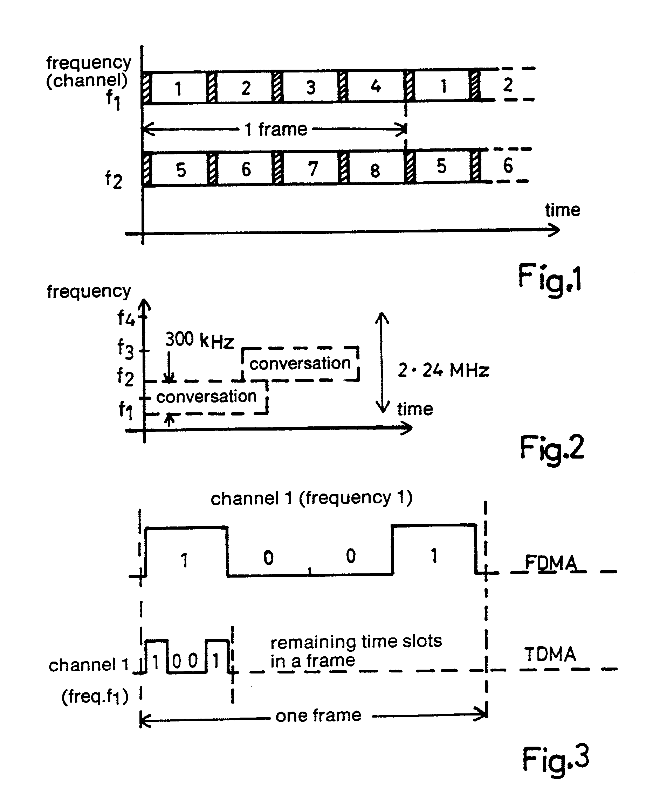

Figure 1 is intended to illustrate the principle. Only 2 radio channels are selected for this example, one with the carrier frequency $f_1$ and the other with $f_2$. According to the example, four different calls are transmitted over the first channel at the frequency $f_1$ and over the second channel at a frequency of $f_2$. The slots are repeated successively in two groups, 1, 2, 3, 4, 1, etc for the first channel and 5, 6, 7, 8, 5 etc for the second channel. Each slot is divided into two sections, of which one is illustrated hatched in Figure 1, and contains control and synchronising information or other information which is not part of the call information. The other part of a slot contains call information. Hereinafter the information within the hatched time interval is designated training sequence and the call information data message. Typical values of the number of bits for the control sequence are 10-30 bits and for the data message 100-300 bits. A slot thus contains some hundreds of bits altogether, depending on the application.

Figure 2 illustrates the situation for the different channel frequencies $f_1$, $f_2$, $f_3$, $f_4$, their associated frequency band and their duration in time. A frequency band may be some hundreds of kHZ, for example, and all the frequency bands take up 24 MHz, for example.

For duplex transmission there are further channel frequencies, e.g. $f_{20}$, $f_{21}$, $f_{22}$ etc, thus bringing the total band up to 2 × 24 MHz.

Figure 3 is intended to illustrate the time compression taking place with TDMA in comparison with frequency division multiple access (FDMA). In the FDMA case only one call is transmitted over channel 1 during the time interval corresponding to a frame in TDMA. In the TDMA case and in the example selected here, the data message and the training sequence pertaining to four different calls shall be accommodated within this time interval. A TDMA transmission thus takes place at a considerably higher bit rate than in FDMA, in this case the bit rate will be 4 times as great.

## Multipath Propagation and Fading

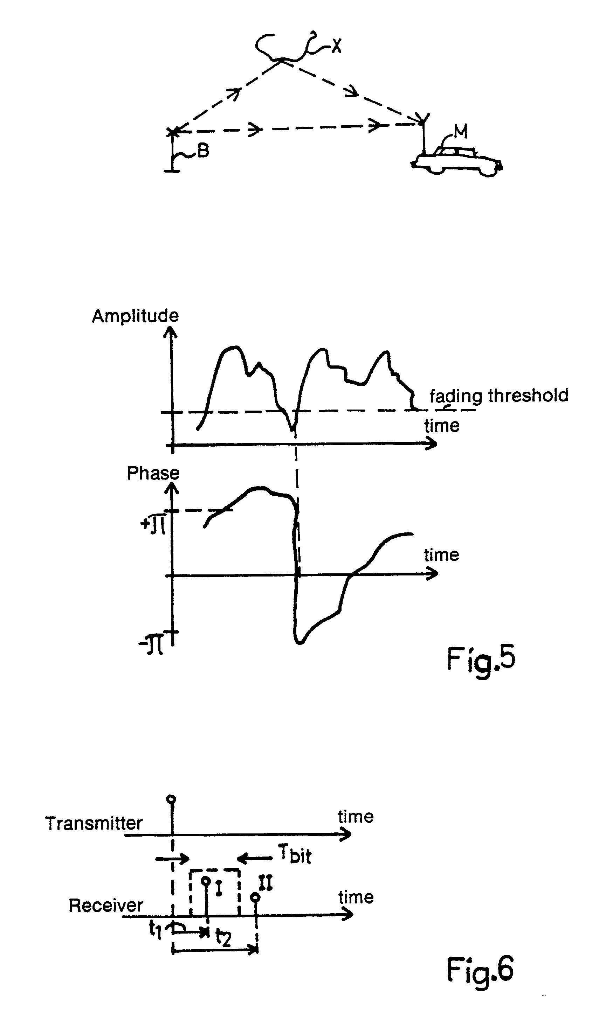

Figure 4 illustrates a base B sending radio waves on a certain channel to a mobile M in TDMA according to Figure 1. Radio waves in a certain direction are reflected against a fixed or moving object X, while other waves are propagated without obstruction up to the mobile M, where they are received. The multipath propagation according to Figure 4 causes fading, which can be of different kinds. So-called "flat fading" occurs if time differences between received waves are concentrated to a time interval which is considerably less than the bit time Tbit (see Figure 6). If the time differences are greater, two or more separated waves occur, each having more or less independent fading. Figure 5 is a graph of amplitude and phase for a pulse which on transmission has a given amplitude and a phase position = 0, but on reception has a varying amplitude and phase due to fading. If the amplitude falls below a given threshold (fading threshold) there will be bit error (logical 1's are understood as 0's) and the speech is distorted. For falling amplitude there is also a change in the phase position. A coherent demodulator in the receiver is thus forced to attempt to follow this phase alteration. By transmitting a known sequence, e.g. 0101 .... during the training interval, the phase position can be unambiguously determined in the receiver. If the channel does not vary too rapidly in relation to slot length, the demodulator does not need to update information as to the signal phase position during the time for detection of the data message. Setting the parameters for a coherent equalizer in a TDMA system, which is formed at the start of each slot, can be seen as a phase locking which is updated once per slot.

## Time Dispersion

Figure 6 illustrates how a transmitted inpulse from the base transmitter is received in the mobile receiver as a result of the above-mentioned fading. As the answer to an inpulse there are obtained two inpulses I and II, of which I is delayed by the time $t_1$ correspond-

ing to the propagation time, and the inpulse II is attenuated and delayed further the time $t_2$, due to reflection against X according to Figure 4. Figure 6 merely illustrates an imagined case for demonstrating the principle. In reality, there is obtained in the receiver so-called intersymbol interference, i.e. an superposition of the pulses I and II. It has been further assumed here that the impulse response comprises only two impulses. In reality, there is obtained an interference pattern comprising a plurality of reflecting inpulses. Figure 6 illustrates so-called time dispersion, i.e. in multipath propagation a transmitted pulse gives rise to a plurality of impulses displaced in time (only two in Figure 6, namely the pulses I and II). Of importance in this connection is the bit time $T_{bit}$ which, for the channel to be regarded as free from time dispersion, should be suffiently long for the pulse II of importance to fall within the $T_{bit}$ interval, i.e.

$$t_2 - t_1 \ll T_{bit}.$$

Time dispersion can give rise to bit errors due to the above-mentioned intersymbol interference. The influence of time dispersion can be reduced by using low data rates, i.e. with $T_{bit}$ relatively large (bit rate < 100K bit/s).

## Equalizers

An equalizer is used in the receiver for compensating the imperfections of the medium. A linear equalizer aims at inverting the transfer function of the channel for the incoming signal so that the channel plus equalizer gives an impulse response = 1 or

$$H_u (Z) \times H_k (Z) = 1$$

where $H_k (Z)$ = the transfer function for the medium between the base B and mobile M in Figure 4, and $H_u (Z)$ = the transfer function of the equalizer. In the case in Figure 5, $H_u (Z)$ must be such that the impulse II will be 0. The equalizer may comprise of such as a FIR filter with a plurality of taps in a conventional embodiment. Using such an equalizer, an adaption can be made at the beginning of each slot, i.e. a known sequence is transmitted during the control sequence, and the equalizer is set for the best reconstruction of transmitted data bits during the subsequent data message.

## Difficult and Easy Channel Cases

Hereinafter a difficult channel case for TDMA is defined as a situation such that ther is no time dispersion. The impulse response of the medium thus comprises a single pulse I according to Figure 6. However there is the risk that the receiver pulse comes below the threshold and due to fading is thus not detected.

In an FDMA system such a signal is detected with the aid of a detector comprising a phase-locked loop of conventional kind. The phase-locked loop follows the phase of the incoming signal and detects it.

In another TDMA channel case, the transmission has a character such that an impulse response according to Figure 6 is obtained, i.e. at least two impulses are received. The probability is great that at least one such impulse is above the noise threshold. This case designated "simple" hereinafter, since there is obtained a diversity effect. The known detector with a phase-locked loop does not function in this case, since the phase-locked loop locks in onto the sum of two mutually independent phase variations (originating from both impulses I and II in Figure 6). It is therefore more suitable, and the risk of bit error is less, if only one equalizer and a demodulator without any phase-lock is utilised.

## Reference to the Prior Art

See "Multipath equalization for digital cellular radio operating at 300 kbit/S". PROCEEDINGS OF THE 36TH IEEE VEHICULAR TECHNOLOGY CONFERENCE, Dallas, Texas. May 20-22, 1986.

## DISCLOSURE OF INVENTION

The concept of the present invention is that for demodulation in the receiver and for single path propagation there is utilised a conventional phase-locked loop further to the equalizer, while only the equalizer is utilised without any phaselocking in multipath propagation.

The object of the present invention is thus to achieve detection and reception of TDMA signals in a mobile radio communication system, such as to give fewer bit errors in both single path and multipath propagation.

The apparatus for this purpose is characterized as is disclosed in the characterizing portion of claim 1.

## BRIEF DESCRIPTION OF DRAWINGS

The invention will now be described in more detail with reference to the accompanying Figures, where

Figures 1-6 have already been explained under the title of "Background Art",

Figure 7 is a principle block diagram of apparatus in accordance with the invention,

Figures 8, 9 are graphs of the radio channel impulse response for single and multipath propagation,

Figures 10, 11 are graphs of the impulse reply over the radio channel with more ambiguous propagation than there is in the cases according to Figures 9 and 9,

Figure 12 is a graph of the transient sequence in a loop filter included in the apparatus according to Figure 7,

Figure 13 is a graph illustrating the control characteristic of the filter.

## BEST MODES FOR CARRYING OUT THE INVENTION

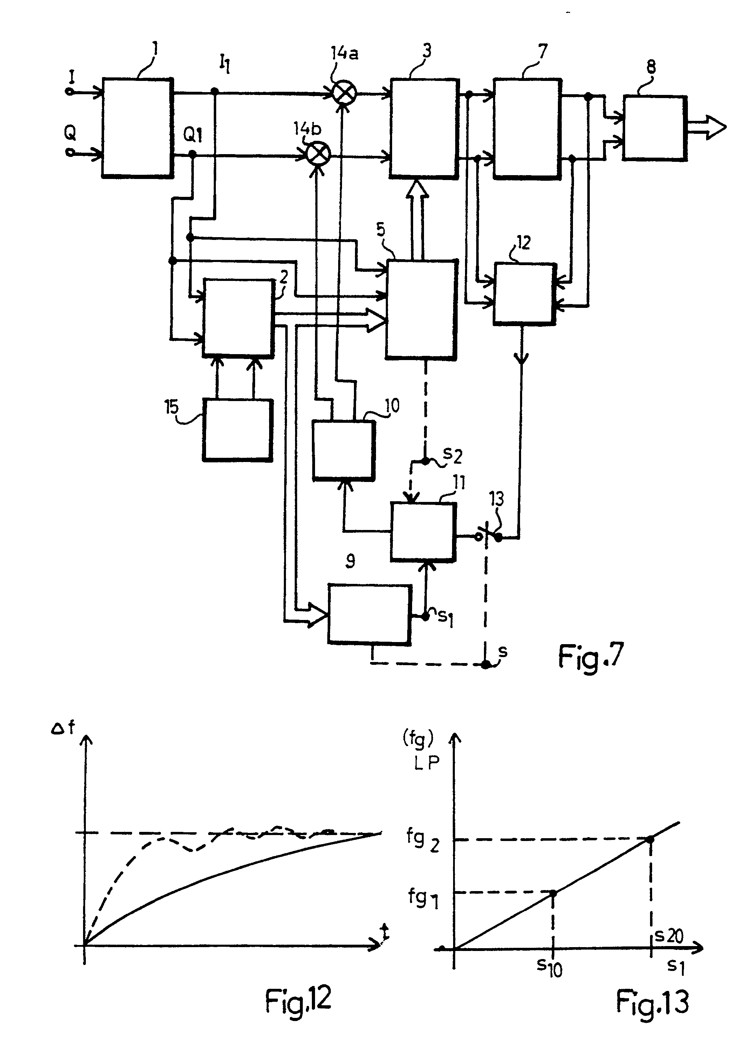

Figure 7 is a block diagram of the proposed apparatus in accordance with the invention, which comprises development of mobile radio receivers for TDMA as in the above-mentioned reference.

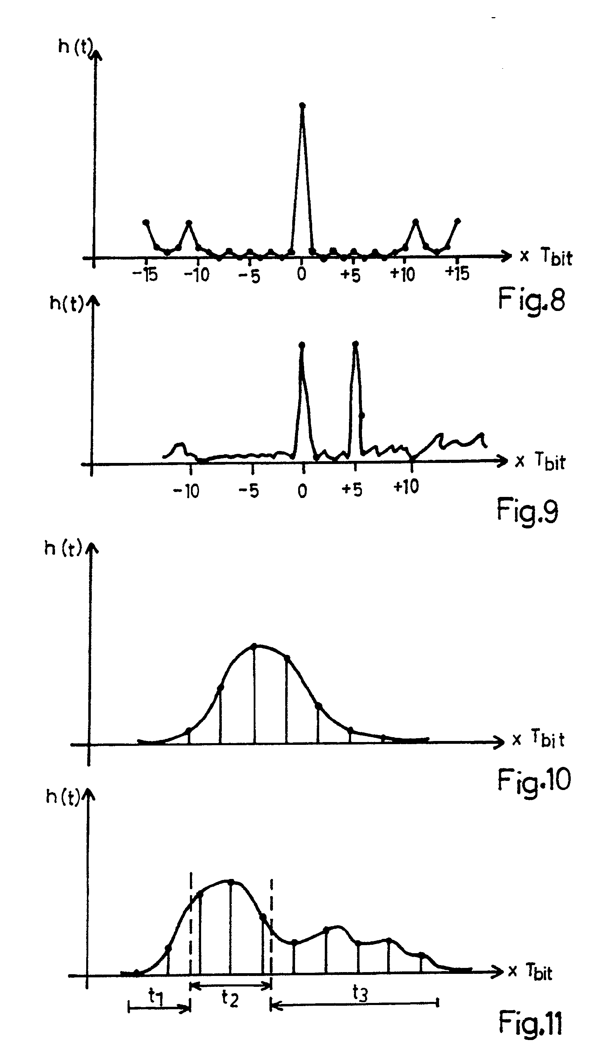

Two quadrature channels I and Q come to an A/D convertor 1, the channels having modulated signals within the baseband from a radio frequency input circuit not illustrated here, but in the above-mentioned reference. This circuit contains a local oscillator, a phase shifter (90°) and a lowpass filter. There are thus obtained across the outputs $I_1$ and $Q_1$ of the A/D convertor two quadrature components within the baseband in sampled form, e.g. in the form of samples with a spacing equal to the sampling rate. Both these components are supplied as one input magnitude to a correlator 2 of known embodiment, the other input pair (real and complex) of which is connected to a store unit (PROM) which stores the synchronising word SW in complex form transmitted by the transmitter side. As previously mentioned, this word is sent within the control sequence. The correlator 2 thus carries out a correlation between the received synchronising word SW transmitted over the radio channel and the synchronising word SW itself, the impulse response of the channel being obtained and sent from the output of the correlator 2. This response is used for estimating the channel with respect to single path or multi path propagation, and the degree of such propagation, which will be apparent from Figures 8-11 below.

An equalizer 3 is connected to the A/D convertor via two multipliers 14a and 14b. The equalizer 3 may comprise filter circuits of conventional embodiment, e.g. as is apparent from the above-mentioned reference, which does shows an equalizer of the so-called decision feedback type.

A parameter calculation unit 5 is associated with the equalizer 3, and is connected to the output of the correlator 2, such as to calculate a suitable parameter array for the equalizer 3 from the incoming signal I1, Q1 and from the impulse response. Digital filters are included in the special case where the equalizer is of the decision feedback type, and the unit 5 then comprises a filter tap calculator. Output data is obtained conventionally from the equalizer 3 via a decision circuit 7 and the multiplexor 8. As far as possible, the equalizer shall counteract the negative effects of the intersymbol interference.

The output signal from the correlator 2 denotes the channel impulse response and thus information as to the channel character, single path or multipath propagation, or degrees of difference therebetween. Since a synchronising word SW is transmitted within each training sequence before the data message in each slot, there is also obtained information as to the channel for each slot sent and transmitted. The unit 5 thus calculates the parameters of the equalizer for each slot 1, 2, 3, 4, 1 etc in Figure 1.

Since a coherent receiver is under consideration, incoming (sampled) code words are divided into an I and a Q channel, and the samples are represented by complex numbers. With FDMA there is used for demodulation in the receiver a phase-locked loop including a voltage controlled oscillator (VCO) which sends a frequency which is mixed with the incoming signal for detection. The phase position of the VCO signal must therefore be coherent with the incoming signal phase. In accordance with this, a phase-locked loop is connected in the present apparatus, this loop containing a phase detector 12, a loop filter (lowpass filter) 11 and a voltage controlled oscillator (VCO) 10. The phase detector 12 has its two input pairs (I and Q) each connected to the output of the equalizer 3 and to the output of the decision circuit 7, respectively, to detect the phase difference between these two output signal pairs (I, Q) in known manner. In addition, a controllable switch 13 is connected between the loop filter 11 and phase detector 12. The voltage controlled oscillator 10 is connected to the multipliers 14a and 14b. The phase detector 12 and oscillator 10 operate conventionally in the loop.

The loop filter 11 comprises in the embodiment illustrated here of a lowpass filter with the cut-off frequency $f_g$. An evaluation circuit 9 is connected to a control input $s_1$ of the filter 11, whereby the band limit $f_g$ can be controlled with the aid of the output signal $s_1$, see the graph in Figure 13. The graphs of Figure 12 illustrate the transient process of the phase-locked loop for different bandwidths $f_g$ of the loop filter 11. Here $\Delta f$ denotes the difference between the transmitting frequency and the frequency of the oscillator 10. For the control signal $s_1 = s_{10}$ the filter 11 is set to a narrow bandwidth and the loop operates "sluggishly" (graph a in Figure 12) and for the control signal $s_1 = s_{20}$ the filter 11 is set to a greater bandwidth whereby the loop operates more rapidly than in the previous case.

In the present embodiment, a controllable switch 13 is further connected between the phase detector 12 and the loop filter 11. The closed or open state of the switch is controlled from the evaluation unit 9 in the cases where there is a pure single path or multipath propagation.

Turning now to Figures 8-11, the different propagation cases and their action on the phase-locked loop function will be more closely described.

Figure 8 illustrates the impulse response for a "pure" single path propagation, i.e. the transmitted and received signal has not been subjected to dispersion (reflexes with long time delay, relative bit time). The correlator 2 detects a single peak when the incoming synchronising word "correlates" with the synchronising word SW. The evaluation unit 9 then sends a control signal s to the switch 13 so that it closes and the phase-locked loop is connected. The control signal $s_1 = s_{20}$ and the loop filter 11 have great bandwidth, whereby the loop rapidly decays (graph b i Figure 12). The loop thus operates as a phase-locked loop in FDMA.

Figure 9 illustrates the impulse response for a "pure" two-path propagation. An impulse response with two individual correlation peaks is obtained, in this case with the time spacing 5 bit times $T_{bit}$. A control signal s is sent from the evaluation unit 9 to the switch 13, so that it comes into its open state and the phase-locked loop is disconnected. No phase detection is then obtained in the receiver and the equalizer estimates transmitted data as illustrated in the above-mentioned reference.

In the cases according to Figures 10 and 11, an impulse response is obtained which does not definitely denote single path or multipath propagation. The impulse response according to Figure 10 can possibly be interpreted as single path propagation, while the response according to Figure 11 can be interpreted as multipath propagation. In the case according to Figure 11, the evaluation unit 9 can, for example, carry out a calculation of the energy within the different time intervals $t_1$, $t_2$ and $t_3$ of the impulse response. If the sum of the energy within the interval $t_2$ is assumed to be $E_1$ and the sum of the energy within the interval $t_1$ and $t_3$ to be $E_2$ the following applies :

If $E_2 > k_1 \times E_1$, where $k_1 = $ a constant, there is multipath propagation and if $E_2 < k_1 \times E_1$, there is single path propagation.

In the first case according to Figure 10, the unit 9 sends a control signal closing the switch 13 and a control signal $s = s_1$ which gives great bandwidth to the loop filter.

In the second case according to Figure 11, the unit 9 thus sends a control signal closing the switch 13 and a control signal $s = s_1$, which gives a narrow bandwidth to the loop filter 11. Alternatively, the switch 13 is not closed at all, corresponding to a bandwidth = 0.

As an alternative to the controllable loop filter 11 and switch 13 a fixed loop filter and an amplifier with controllable gain may be used.

In certain cases it is possible to exclude the evaluation circuit 9 and instead connect the parameter calculation unit 5 to the loop filter 11 or the amplifier. In the latter case there is thus used the coefficient array calculated in the calulation circuit 5 as control magnitude $s_2$ to the filter/amplifier (illustrated by dashed lines). Common to both embodiments is that a signal derived from the impulse response of the channel is formed within the synchronising interval SW and is utilised as control magnitude for the phase-locked loop.

## Claims

1. Apparatus in a coherent mobile telephone receiver for reducing bit error in single path and multipath propagation, where transmission of the mobile telephone signals over the different channels takes place in the form of time slots with data bits, said slots each containing a first time interval (SW) for control and synchronising information and a second time interval (1, 2, 3 ...) for call information including a radio frequency input circuit which divides the incoming radio frequency into two quadrature components, and A/D converter (1), and equalizer (3), which is set from the radio channel impulse response such that it carries out a reconstruction of transmitted data bits on the converted components, decision means and multiplexing means (7, 8) for retrieving transmitted call information from the equalizer (3), characterized by means (2, 15) for retrieving the radio channel impulse response from said first time signal (SW), a feedback loop (10, 11, 12, 13) for detecting the phase of the outgoing data signals and phase-locking the signals coming into the equalizer (3), said loop being connectable and disconnectable in response to whether the impulse response indicates single or multipath propagation.

2. Apparatus as claimed in claim 1, characterized in that the feedback loop contains a controllable switch (13) which closes or opens the loop (10, 11, 12) in response to a first control signal (s) which is derived from the character of said impulse response.

3. Apparatus as claimed in claims 1-2, characterized by an evaluation unit (9), which evaluates from said means (2, 15) for retrieving the radio channel impulse response whether single path or multipath propagation is present for the slot in question and in response to this evaluation sending said control signal (s) so that the loop (10, 11, 12) is connected or disconnected.

4. Apparatus as claimed in claim 3, characterized in that the feed-back loop (10, 11, 12) includes a loop filter (11) with a controllable bandwidth (fg) and in that said evaluation unit (9) sends a second control signal ($s_1$) in response to whether single path or multipath propagation has been evaluated from the impulse response and where a single path propagation has been evaluated, the control signal ($s_1$) controls the loop filter (11) so that the latter has a large band width (11) and if multipath propagation has been evaluated, the control signal ($s_1$) controls the loop filter (11) so that it has a narrow band width (12).

5. Apparatus as claimed in claim 1, characterized in that said means (2, 15) comprise a correlator (2) and a storage unit (15), said unit storing a synchronising word (SW) determined on the transmitted side, the correlator (2) carrying out a correlation between the data bits in said first time interval and the synchronising words so that said impulse response is obtained.

6. Apparatus as claimed in claim 5, characterized in that the equalizer (3) has a parameter calculation unit (5), which sends a control signal $(s_2)$ responsive to the parameters calculated for the equalizing unit (3), said control signal $(s_2)$ being supplied to said loop filter (11) to control its bandwidth such that a large bandwidth is set in the filter (11) for single path propagation while narrow bandwidth is set for multipath propagation.

## Patentansprüche

1. Vorrichtung in einem Kohärenz-Mobiltelefonempfänger zur Verringerung eines Bitfehlers bei Einweg- und Mehrwegübertragung, bei der die Aussendung der Mobiltelefonsignale über die verschiedenen Kanäle in Form von Zeitfenstern mit Datenbits erfolgt, jedes der Fenster ein erstes Zeitintervall (SW) zur Steuerung und Synchronisierung von Daten enthält, und ein zweites Zeitintervall (1, 2, 3, ...) für Rufdaten, mit einer Funkfrequenzeingangsschaltung, die die ankommende Funkfrequenz in zwei um 90° phasenverschobene Komponenten unterteilt, und einem A/D-Umsetzer (1), und einem Entzerrer (3), der von der Funkkanalimpulsantwort derart eingestellt wird, dass er, ausgehend von den umgesetzten Komponenten einen Wiederaufbau der ausgesandten Datenbits durchführt, und mit einer Entscheidungsvorrichtung und Multiplexervorrichtung (7, 8) zur Entnahme der ausgesandten Rufdaten aus dem Entzerrer (3), **gekennzeichnet** durch eine Vorrichtung (2, 15) zur Entnahme der Funkkanalimpulsantwort aus dem ersten Zeitsignal (SW), einer Rückkopplungsschleife (10, 11, 12, 13) zur Erfassung der abgehenden Datensignale und zur Phasenverriegelung der in den Entzerrer (3) eintretenden Signale, wobei die Rückkopplungsschleife anschliessbar und abtrennbar abhängig davon ist, ob die Impulsantwort eine Einweg- oder Mehrwegübertragung anzeigt.

2. Vorrichtung nach Anspruch 1, dadurch **gekennzeichnet**, dass die Rückkopplungsschleife einen steuerbaren Schalter (13) enthält, der die Rückkopplungsschleife (10, 11, 12) schliesst oder öffnet, abhängig von einem ersten Steuersignal (s), das vom Charakter der Impulsantwort abgeleitet ist.

3. Vorrichtung nach den Ansprüchen 1 bis 2, **gekennzeichnet** durch eine Bewertungseinheit (9), die, ausgehend von der Vorrichtung (2, 15) zur Entnahme der Funkkanalimpulsantwort bewertet, ob für das in Frage stehende Zeitfenster eine Einweg- oder Mehrwegübertragung vorliegt und abhängig von dieser Bewertung das Steuersignal (s) aussendet, so dass die Rückkopplungsschleife (10, 11, 12) angeschlossen oder abgetrennt wird.

4. Vorrichtung nach Anspruch 3, dadurch **gekennzeichnet**, dass die Rückkopplungsschleife (10, 11, 12) ein Schleifenfilter (11) mit steuerbarer Bandweite (fg) enthält und dass die Bewertungseinheit (9) ein zweites Steuersignal $(s_1)$ abhängig davon aussendet, ob die Bewertung der Impulsantwort eine Einweg- oder Mehrwegübertragung ergab, und falls die Bewertung eine Einwegübertragung ergab, das Steuersignal $(s_1)$ das Schleifenfilter (11) derart steuert, dass es eine grosse Bandbreite (11) aufweist und falls die Bewertung eine Mehrwegübertragung ergab, das Steuersignal $(s_1)$ das Schleifenfilter (11) derart steuert, dass es eine schmale Bandbreite (12) hat.

5. Vorrichtung nach Anspruch 1, dadurch **gekennzeichnet**, dass die Vorrichtung eine Korrelationsschaltung (2) und eine Speichereinheit (15) umfasst, die Speichereinheit ein Synchronisierungswort (SW) speichert, das an der Senderseite bestimmt wird, die Korrelationsschaltung (2) eine Korrelation zwischen den Datenbits im ersten Zeitintervall und den Synchronisierungsworten ausführt, so dass die erwähnte Impulsantwort erhalten wird.

6. Vorrichtung nach Anspruch 5, dadurch **gekennzeichnet**, dass der Entzerrer (3) eine Parameterberechnngseinheit (5) hat, die abhängig von den für die Entzenereinheit (3) berechneten Parametem ein Steuersignal $(s_2)$ aussendet, das Steuersignal $(s_2)$ dem Schleifenfilter (11) zugeführt wird, um dessen Bandbreite derart zu steuern, dass im Filter (11) für eine Einwegübertragung eine grosse Bandbreite eingestellt wird, während für Mehrwegübertragung eine schmale Bandbreite eingestellt wird.

## Revendications

1. Appareil incorporé dans un récepteur téléphonique mobile cohérent pour réduire le taux d'erreurs de bit en propagation par chemin unique et par chemins multiples, dans lequel la transmission des signaux de téléphonie mobile sur les différents canaux s'effectue sous la forme de créneaux temporels contenant des bits de données, chacun de ces créneaux temporels contenant un premier intervalle de temps (SW) pour une information de commande et de synchronisation, et un second intervalle de temps (1, 2, 3 ...) pour une information d'appel, comprenant un circuit d'entrée radiofréquence qui divise le signal radiofréquence entrant en deux composantes en quadrature, et un convertisseur A/N (1) et un égaliseur (3), qui est réglé sur la base de la réponse impulsionnelle de façon à effectuer sur les composantes converties une reconstruction de bits de données émis, des moyens de décision et des moyens de multiplexage (7, 8) pour récupérer l'information d'appel émise, à partir de l'égaliseur (3), caractérisé par des moyens (2, 15) pour obtenir la réponse impulsionnelle du canal radioélectrique à partir du signal du premier intervalle de temps (SW), et une boucle de rétroaction (10, 11, 12, 13) pour détecter la phase des signaux de données sortants et pour effectuer un verrouillage de phase sur les signaux qui entrent dans l'égaliseur (3), cette boucle pouvant être connectée et déconnectée selon que la réponse impulsionnelle indique un propagation par chemin unique ou par chemins multiples.

2. Appareil selon la revendication 1, caractérisé en ce que la boucle de rétroaction contient un interrupteur commandé (13) qui ferme ou ouvre la boucle (10, 11, 12) sous la dépendance d'un premier signal de commande (s) qui est élaboré sur la base du type de la réponse impulsionnelle.

3. Appareil selon les revendications 1-2, caractérisé par une unité d'évaluation (9) qui, sous la dépendance des moyens (2, 15) destinés à obtenir la réponse impulsionnelle du canal radioélectrique, évalue le type de propagation, c'est-à-dire une propagation par chemin unique ou une propagation par chemins multiples, qui existe pour le créneau temporel considéré, et qui réagit à cette évaluation en émettant le signal de commande (s) de façon que la boucle (10, 11, 12) soit connectée ou déconnectée.

4. Appareil selon la revendication 3, caractérisé en ce que la boucle de rétroaction (10, 11, 12) comprend un filtre de boucle (11) avec une largeur de bande pouvant être commandée (fg), et en ce que l'unité d'évaluation (9) émet un second signal de commande ($s_1$) sous la dépendance du fait que l'évaluation effectuée sur la base de la réponse impulsionnelle indique une propagation par chemin unique ou par chemins multiples, et dans le cas où l'évaluation indique une propagation par chemin unique, le signal de commande ($s_1$) commande le filtre de boucle (11) de façon que ce dernier ait une grande largeur de bande (11), tandis que si l'évaluation indique une propagation par chemins multiples, le signal de commande ($s_1$) commande le filtre de boucle (11) de façon qu'il ait une faible largeur de bande (12).

5. Appareil selon la revendication 1, caractérisé en ce que les moyens précités (2, 15) comprennent un corrélateur (12) et une unité de mémoire (15), cette unité conservant un mot de synchronisation (SW) qui est déterminé du côté émetteur, et le corrélateur (2) effectuant une corrélation entre les bits de données dans le premier intervalle de temps et les mots de synchronisation, de façon à obtenir la réponse impulsionnelle précitée.

6. Appareil selon la revendication 5, caractérisé en ce que l'égaliseur (3) comporte une unité de calcul de paramètres (5), qui émet un signal de commande ($s_2$) sous la dépendance des paramètres qui sont calculés pour l'unité d'égalisation (3), et ce signal de commande ($s_2$) est appliqué au filtre de boucle (11) pour commander sa largeur de bande, de façon à régler une grande largeur de bande pour le filtre (11) dans le cas de la propagation par chemin unique, et à régler une faible largeur de bande pour la propagation par chemins multiples.

Fig.1

Fig.2

Fig.3

Amplitude

fading threshold

time

Phase

$+\pi$

time

$-\pi$

Fig.5

Transmitter    time

$T_{bit}$

I    II

Receiver    time

$t_1$    $t_2$

Fig.6

EP 0 295 226 B1

Fig.7

Fig.12

Fig.13

h(t)

x T_bit

-15   -10   -5   0   +5   +10   +15

Fig.8

h(t)

x T_bit

-10   -5   0   +5   +10

Fig.9

h(t)

x T_bit

Fig.10

h(t)

x T_bit

t₁   t₂   t₃

Fig.11